Europäisches Patentamt

European Patent Office

Office européen des brevets

(11) Veröffentlichungsnummer: **0 355 755 B1**

# EUROPÄISCHE PATENTSCHRIFT

(45) Veröffentlichungstag der Patentschrift: **01.06.94**

(51) Int. Cl.⁵: **G11B 5/706**, C01G 37/027

(21) Anmeldenummer: **89115309.0**

(22) Anmeldetag: **19.08.89**

(54) Chromdioxidmaterial, Verfahren zu dessen Herstellung sowie magnetische Aufzeichnungsträger enthaltend dieses Chromdioxidmaterial.

(30) Priorität: **23.08.88 DE 3828498**

(43) Veröffentlichungstag der Anmeldung:
**28.02.90 Patentblatt 90/09**

(45) Bekanntmachung des Hinweises auf die
Patenterteilung:
**01.06.94 Patentblatt 94/22**

(84) Benannte Vertragsstaaten:
**DE FR GB NL**

(56) Entgegenhaltungen:
**EP-A- 0 078 042       EP-A- 0 218 234
DE-A- 2 749 757       DE-A- 3 240 337
FR-A- 2 009 424       US-A- 4 495 246**

(73) Patentinhaber: **BASF Aktiengesellschaft
Carl-Bosch-Strasse 38
D-67063 Ludwigshafen(DE)**

(72) Erfinder: **Mueller, Michael Wolfgang, Dr.
Neurott 56
D-6831 Plankstadt(DE)**
Erfinder: **Schwab, Ekkehard, Dr.
Berwartsteinstrasse 4
D-6730 Neustadt(DE)**
Erfinder: **Auweter, Helmut, Dr.**
**Lessingstrasse 35
D-6703 Limburgerhof(DE)**
Erfinder: **Feser, Rainer, Dr.
Colgensteiner Weg 25
D-6718 Gruenstadt(DE)**
Erfinder: **Huebner, Werner
Hauptstrasse 48c
D-6710 Frankenthal(DE)**
Erfinder: **Mueller, Norbert, Dr.
Maximilianstrasse 23
D-6701 Friedelsheim(DE)**
Erfinder: **Ohlinger, Manfred, Dr.
Anselm-Feuerbach-Strasse 13
D-6710 Frankenthal(DE)**
Erfinder: **Dikow, Hermann, Dr.
Birkenallee 74
D-6832 Hockenheim(DE)**

EP 0 355 755 B1

**Beschreibung**

Die Erfindung betrifft ein Chromdioxidmaterial mit verbesserter Stabilität gegen chemischen Abbau und gegen Verminderung der magnetischen Eigenschaften insbesondere durch Temperatur- und Feuchtigkeitsbelastung, ein Verfahren zu dessen Herstellung durch eine zweistufige Oberflächenbehandlung sowie magnetische Aufzeichnungsträger mit erhöhter Langzeitstabilität enthaltend dieses Chromdioxidmaterial.

Nadelförmiges, ferromagnetisches Chromdioxid, seine Herstellung und die Verwendung dieses Materials für magnetische Aufzeichnungsträger sind vielfach beschrieben. Magnetische Aufzeichnungsträger, die Chromdioxid enthalten, zeigen im allgemeinen gegenüber Aufzeichnungsträgern auf Basis anderer magnetischer Oxide überlegene magnetische Eigenschaften.

Es ist jedoch auch bekannt, daß sich die magnetischen Eigenschaften von nichtstabilisiertes Chromdioxid enthaltenden Aufzeichnungsträgern im Laufe der Zeit verschlechtern. Ferromagnetisches Chromdioxid in Pulverform ist bei Ausschluß von Feuchtigkeit weitgehend stabil, auch ist eine Änderung der magnetischen Eigenschaften über lange Zeit nicht feststellbar. Es wurde aber beobachtet, daß Chromdioxid sowohl von Wasser als auch von anderen Materialien, beispielsweise den bei der Herstellung von magnetischen Aufzeichnungsträgern verwendeten organischen Polymerbindemitteln unter Zersetzung zu nichtmagnetischen Bestandteilen angegriffen werden kann. Bei magnetischen Aufzeichnungsträgern bedeutet dies neben einem Verlust bei den magnetischen und somit elektroakustischen Eigenschaften auch eine Beeinträchtigung der mechanischen Werte. Diese Verschlechterung wird bei höheren Temperaturen noch beschleunigt. Es hat daher nicht an Versuchen gefehlt, diese Nachteile zu beseitigen. So beschreibt die US-A 3 512 930 die Behandlung von Chromdioxid-Pulver mit, einem Reduktionsmittel. Nach anderen Verfahren werden Aluminiumoxid Überzüge (US-A 3 687 726) oder solche aus schwerlöslichen Metallphosphaten (US-A 3 686 031) erzeugt. Auch das Aufbringen von Metallverbindungen, deren Kationen zur Bildung schwerlöslicher Chromate befähigt sind, ist bereits bekannt (DE-B 21 52 331). Die JA-A-21200/76 schlagt zur Umhüllung der Chromdioxid-Teilchen das oberflächliche Aufbringen magnetischer Eisenoxide vor, während gemäß der DE-A-27 49 757 Eisen-(III)-haltige oxidische Niederschläge auf das Chromdioxid aufgebracht werden. Die EP-B 0078042 beschreibt ein Stabilisierungsverfahren, bei dem in die Oberfläche der Chromdioxidteilchen Metalle, wie z.B. Eisen, Zink, Kobalt oder Mangan, eingebaut werden. Ebenfalls wurde bereits versucht, nur durch Temperaturbehandlung des Chromdioxids unter Inertgasatmosphäre (EP-B 0029687) oder auch an Luft (EP-B 0248402) die Stabilität zu erhöhen.

Alle diese Verfahren weisen jedoch den Nachteil auf, daß die magnetischen Eigenschaften der behandelten Chromdioxidmaterialien durch eine nichtmagnetische Oberflächenschicht, welche entweder durch eine Umhüllung mit Fremdverbindungen oder eine Zersetzungsschicht erreicht wird, stark vermindert werden und dennoch die mit den nach diesen Verfahren erhaltenen Chromdioxidmaterialien hergestellten Aufzeichnungsträger nicht die inzwischen insbesondere im Datenbereich geforderte Langzeitstabilität in ausreichendem Maße erlangen. Wie umfangreiche Untersuchungen gezeigt haben, wird die Instabilität des Chromdioxidmaterials in einer Magnetschicht, insbesondere bei höheren Temperaturen vorwiegend durch die Feuchte der Umgebungsluft hervorgerufen. Durch den Angriff der Luftfeuchtigkeit wird das Chromdioxid in Umkehrung seiner Herstellreaktion in eine Chrom(III)oxid-haltige Verbindung und in Chromationen gespalten, wobei letztere die organischen Komponenten der Magnetschicht oxidativ angreifen. So wird die Stabilität des Chromdioxids in der Magnetschicht bei 0 % relativer Feuchte kaum beeinflußt, erst eine hohe relative Feuchte, von z.B. 95 %, führt selbst bei stabilisiertem Chromdioxid zu einem Rückgang. Dies zeigt, daß eine Stabilisierung des Chromdioxids nach dem Stand der Technik dieses zwar verbessert, unter ungünstigen Bedingungen aber nicht ausreichend ist, um den Einfluß des Wasserdampfes zu verhindern.

Es bestand daher die Aufgabe, ein Chromdioxidmaterial bereitzustellen, das ohne wesentliche Einbußen bei den magnetischen Eigenschaften, insbesondere der Sättigungsmagnetisierung, eine entscheidend verbesserte Stabilität gegen den durch Feuchtigkeit bedingten chemischen Abbau aufweist, sowie ein Verfahren zur Herstellung dieses Materials aufzuzeigen. Eine weitere Aufgabe bestand auch darin, magnetische Aufzeichnungsträger mit der vor allem für die Datenspeicherung erforderlichen erhöhten Langzeitstabilität zu ermöglichen.

Es wurde nun gefunden, daß die Aufgabe mit einem Chromdioxidmaterial, bestehend aus nadelförmigen, ferromagnetischen Chromdioxidteilchen mit einer nichtmagnetischen, wasserstoffhaltigen Oberflächenschutzschicht gelöst werden kann, wenn das Chromdioxidmaterial bei einem Z 200-Wert von kleiner 0,85 ppm eine Sättigungsmagnetisierung von größer 80 $nTm^3/g$ aufweist.

Der Z 200-Wert gemäß der Erfindung gibt Aufschluß über die Stabilität des Chromdioxids gegenüber dem durch Feuchtigkeits- und Temperatureinflüsse bedingten chemischen Abbau des Materials, d.h. der Disproportionierung des Chrom(IV) in Chrom (III) und Chrom(VI). Der Z 200-Wert wird dadurch bestimmt, daß 92 g Chromdioxid in 1720 ml Wasser in einem Glasgefäß 200 Stunden bei Raumtemperatur auf einem

2

Rollbrett (Drehzahl 80 Upm) gemahlen werden. Danach wird die Suspension filtriert und im Filtrat der Chromatgehalt bestimmt. Daraus ergibt sich der Z 200-Wert, angegeben in ppm $CrO_3$ (mg $CrO_3$/l).

Zur Herstellung des erfindungsgemäßen Chromdioxidmaterials wird das nach den bekannten Verfahren synthetisierte Produkt als Ausgangsmaterial eingesetzt. So beschreiben beispielsweise die US-Patente 2 956 955, 3 117 093 und 3 278 263 sowie die europäischen Patente 27 640 und 198 110 die Herstellung von Chromdioxid, welches unter Zuhilfenahme spezieller Modifizierungsmittel auf der Basis von Antimon, Selen, Tellur und/oder Eisen oder deren Verbindungen besonders vorteilhafte magnetische Eigenschaften sowie eine enge Teilchengrößenverteilung aufweist.

Zur Durchführung des erfindungsgemäßen Verfahrens wird das bei der Hochdrucksynthese entstandene und noch unbehandelte Chromdioxidmaterial zuerst bei einer Temperatur zwischen 360 und 420°C 10 bis 360 Minuten lang getempert, anschließend in 5 bis 15 Gewichtsteilen Wasser je Gewichtsteil Chromdioxid suspendiert und mit 0,2 bis 0,4 Gewichtsteilen Natriumsulfit, in Wasser gelöst, versetzt und bei 60 bis 95°C bis zu 180 Minuten lang behandelt. Danach wird das Chromdioxidmaterial abfiltriert, gewaschen und getrocknet.

Das auf diese Weise erhaltene erfindungsgemäße Chromdioxidmaterial zeichnet sich durch eine außergewöhnliche Stabilität gegenüber der durch Wasser ausgelösten Disproportionierung aus, ohne aber in den magnetischen Eigenschaften in dem aus dem Stand der Technik bekannten Ausmaß abzufallen, d.h. die Sättigungsmagnetisierung beträgt stets mehr als 80 $nTm^3$/g. Die erfindungsgemäßen Chromdioxidmaterialien weisen somit eine besonders wirksame Oberflächenschutzschicht auf, welche besonders vorteilhaft ist, da sie ohne Zuhilfenahme fremder Metallkomponenten, sei es durch Aufbringen eines Niederschlags oder durch Einbau in den Oberflächenbereich der Chromdioxidteilchen zustande kommt.

Die synergistische Wirkung der beiden aufeinanderfolgenden Stabilisierungsschritte ist überraschend, da die Einzelmaßnahmen in ihrer Wirkung weit zurückbleiben.

Die Verarbeitung des erfindungsgemäßen Chromdioxids zu magnetischen Aufzeichnungsträgern erfolgt nach bekannten Methoden. Für die Herstellung der Magnetschicht werden je Gewichtsteile Bindemittel 2 bis 10 Gew.-Teile Chromdioxid zusammen mit dem Bindemittel und den geeigneten Dispergierhilfsmitteln, Gleitmitteln und weiteren üblichen Zusatzstoffen in einer Gesamtmenge bis zu 10 Gew.% des Chromdioxids zu einer Dispersion verarbeitet. Die so erhaltene Dispersion wird filtriert und mit einer üblichen Beschichtungsmaschine, z.B. mittels eines Linealgießers, auf den unmagnetischen Träger in einer oder mehreren dünnen Schichten oder auf einen mit einer anderen Magnetschicht bereits versehenen Magnetogrammträger in dünner Schicht aufgetragen. Vor Trocknung der flüssigen Beschichtungsmischung bei Temperaturen zwischen 50 und 90°C wird gegebenenfalls eine magnetische Ausrichtung der Chromdioxidteilchen vorgenommen. Für eine spezielle Oberflächenvergütung der Magnetschicht werden die beschichteten Folienbahnen zwischen geheizten, polierten Walzen unter Druck hindurchgeführt. Danach betragen die Dicken der Magnetschichten üblicherweise zwischen 1,5 und 12 $\mu$m.

Als Bindemittel für die Magnetschichten werden die bekannten Polymerbindemittel verwendet, wie Acrylat-Copolymere, Polyvinylacetate, wie Polyvinylformal oder Polyvinylbutyral, höhermolekulare Epoxidharze, Polyurethane und Gemische dieser und ähnlicher Bindemittel. Als vorteilhaft haben sich die in einem flüchtigen organischen Lösungsmittel löslichen elastomeren und praktisch isocyanatgruppenfreien linearen Polyesterurethane erwiesen, wie sie durch Umsetzung eines Polyesters aus einer aliphatischen Dicarbonsäure mit 4 bis 6 C-Atomen, wie Adipinsäure, und mindestens einem aliphatischen Diol mit 3 bis 10 C-Atomen, wie 1,2- und 1,3-Propylenglykol, 1,4-Butandiol, Diethylenglykol, Neopentylglykol oder 1,8-Octandiol, mit einem Diisocyanat mit 6 bis 24 und insbesondere 8 bis 20 C-Atomen, wie Toluylendiisocyanat oder 4,4'-Diisocyanatodiphenylmethan, bevorzugt in Gegenwart einer kleineren Menge eines Glykols mit 4 bis 10 C-Atomen, wie 1,4-Butandiol, das eine Kettenverlängerung bewirkt, hergestellt werden können. Bevorzugt sind solche Polyesterurethane aus Adipinsäure, 1,4-Butandiol und 4,4'-Diisocyanatodiphenylmethan. Bevorzugte Polyesterurethane haben eine Shore-Härte A von 70 bis 100, eine Reißfestigkeit von 40 bis 42 $N/mm^2$ (nach DIN 53 455) und eine Reißdehnung (nach DIN 53 455) von etwa 440 bis 560 %. Der K-Wert nach H. Fikentscher (Cellulose-Chemie 13 (1932), Seite 58ff) liegt für die besonders geeigneten Polymerbindemittel zwischen 40 und 60 (1%ig in DMF).

Magnetische Aufzeichnungsträger, welche unter Verwendung des erfindungsgemäßen Chromdioxidmaterials gefertigt wurden, weisen eine remanente Magnetisierung der Magnetschicht von mindestens 145 mT und vorzugsweise von 145 bis 220 mT, insbesondere 150 bis 180 mT, auf, welche auch im Klimatest um weniger als 1,5% abnimmt. Diese Klimastabilität wird dadurch bestimmt, daß ein magnetischer Aufzeichnungsträger bei 50°C und 70% rel. Feuchte 14 Tage gelagert und anschließend die remanente Magnetisierung bei Raumtemperatur bestimmt wird. Angegeben wird der nach der Klimabeanspruchung gemessene Remanenzwert ($M_r$(14)) und die Abnahme des Remanenzwertes in Prozent, bezogen auf den Anfangswert. Die Bestimmung der remanenten Magnetisierung $M_r$ in [mT] erfolgt mittels eines Schwingmagnetometers in einem Meßfeld von 380 kA/m.

Die Erfindung sei anhand der folgenden Beispiele gegenüber den Vergleichsversuchen nach dem Stand der Technik näher erläutert. Die in den nachstehenden Beispielen und den Vergleichsversuchen genannten Teile und Prozente beziehen sich, soweit nicht anders angegeben, auf das Gewicht. Volumenteile verhalten sich zu Teilen wie Liter zu Kilogramm.

Beispiel 1

Ein gemäß Beispiel 1 der EP-A 0198110 hergestelltes $CrO_2$, dessen Dotierungsmenge mit der des Beispiels 1 der EP-A 0027640 übereinstimmt, wurde jedoch ohne $Na_2SO_3$- bzw. Eisensulfat-Nachbehandlung bei 50°C an der Luft getrocknet. Danach wurde das Material bei 380°C 60 min lang unter Luft einer Wärmebehandlung unterworfen und anschließend im Verhältnis 1:10 in einer 25%igen Natriumsulfitlösung in Wasser bei 95°C suspendiert und nach 180 Minuten abfiltriert, mit Wasser gewaschen und im Vakuum bei 50°C getrocknet.

An dem resultierenden Chromdioxid werden die spezifische Oberfläche BET in $[m^2/g]$ gemäß DIN 66 132 mittels eines Ströhlein-Areameters der Firma Ströhlein, Düsseldorf, nach dem Einpunkt-Differenzverfahren nach Haul und Dümbgen sowie die magnetischen Eigenschaften mittels eines Schwingmagnetometers in einem Meßfeld von 380 kA/m bestimmt, und zwar die Koerzitivfeldstärke $H_c$ in [kA/m] sowie die spezifische Remanenz $M_r/\rho$ und die Sättigungsmagnetisierung $Mm/\rho$ in $[nTm^3/g]$. Außerdem wurde noch der Wasserstoffgehalt des Materials durch Verbrennen der Substanz bei 1000°C und anschließende Bestimmung des entstandenen Wassers mittels Infrarotspektroskopie sowie der Z 200-Wert, wie beschrieben, ermittelt.

Die Meßergebnisse sind in Tabelle 1 angegeben.

Beispiele 2 bis 5

Es wurde wie in Beispiel 1 beschrieben verfahren, jedoch mit den in Tabelle 1 angegebenen unterschiedlichen Parametern.

Die Meßergebnisse sind in Tabelle 1 angegeben.

Vergleichsversuche 1 bis 6

Es wurde wie in Beispiel 1 beschrieben verfahren, jedoch mit den in Tabelle 1 angegebenen unterschiedlichen Parametern.

EP 0 355 755 B1

Die Meßergebnisse sind in Tabelle 1 angegeben.

Tabelle 1

| | Temper-temp. [°C] | Temper-dauer [min] | Stab. bedingungen | $H_c$ [kA/m] | $M_m/\varrho$ [nTm³/g] | $M_r/\varrho$ [nTm³/g] | BET [m²/g] | H-Gehalt [Gew.%] | Z 200-Wert [ppm] |
|---|---|---|---|---|---|---|---|---|---|
| Beispiel 1 | 380 | 60 | 25% $Na_2SO_3$ 180', 95°C | 39 | 91 | 38 | 25 | 0,3 | 0,8 |
| Beispiel 2 | 400 | 120 | 20% $Na_2SO_3$ 45', 85°C | 39 | 84 | 38 | 25 | 0,3 | < 0,1 |
| Beispiel 3 | 420 | 20 | 20% $Na_2SO_3$ 45', 85°C | 42 | 91 | 43 | 28 | 0,3 | < 0,1 |
| Beispiel 4 | 380 | 240 | 20% $Na_2SO_3$ 45', 85°C | 40 | 93 | 42 | 26 | 0,3 | 0,3 |
| Beispiel 5 | 380 | 60 | 20% $Na_2SO_3$ 45', 85°C | 39 | 90 | 41 | 25 | 0,3 | 0,8 |
| Vergl. vers. 1 | 300 | 80 | 13% $Na_2SO_3$ 45', 20°C | 41 | 99 | 45 | 26 | 0,2 | 37,2 |
| Vergl. vers. 2 | 180 | 80 | 13% $Na_2SO_3$ 45', 20°C | 44 | 80 | 46 | 27 | 0,2 | 81,2 |
| Vergl. vers. 3 | 380 | 60 | – | 38 | 91 | 49 | 25 | 0,0 | 538,4 |

5

Tabelle 1 (Fortsetzung)

| | Temper.-temp. [°C] | Temper-dauer [min] | Stab.-bedingungen | $H_c$ [kA/m] | $M_m/\varrho$ [nTm³/g] | $M_r/\varrho$ [nTm³/g] | BET [m²/g] | H-Gehalt [Gew.%] | Z 200-Wert [ppm] |
|---|---|---|---|---|---|---|---|---|---|
| Vergl. vers. 4 | – | – | 20% $Na_2SO_3$ 45', 85°C | 41 | 86 | 41 | 25 | 0,3 | 33,7 |
| Vergl. vers. 5 | 300 | 60 | 25% $Na_2SO_3$ 180', 95°C | 41 | 86 | 41 | 25 | 0,3 | 33,7 |
| Vergl. vers. 6 | 180 | 80 | 10% $Na_2SO_3$ 45', 20°C | 50 | 92 | 43 | 35 | 0,2 | 259,3 |

Beispiele B1 bis B5

In einer 500 Volumenteile fassenden und mit 100 Volumenteilen Stahlkugeln mit einem Durchmesser von 1,5 mm gefüllten Mühle wurden jeweils 40 Teile der in Tabelle 1 angegebenen Chromdioxidproben mit 175 Teilen einer 13%-igen Lösung eines thermoplastischen Polyesterurethans aus Adipinsäure, 1,4-Butandiol, 4,4'-Diisocyanatodiphenylmethan in einem Gemisch aus gleichen Teilen Tetrahydrofuran und Dioxan, 150 Teile einer 13%igen Lösung eines handelsüblichen Polyvinylformals in einer Mischung aus gleichen Teilen Tetrahydrofuran und Dioxan, 24 Teile eines Lösungsmittelgemisches aus gleichen Teilen Tetrahydrofuran und Dioxan und 1 Teil Zinkstearat gemischt und 4 Stunden dispergiert. Danach wurden noch einmal die gleichen Mengen der beiden Bindemittellösungen, 13,5 Teile des genannten Lösungsmittelgemisches sowie 0,1 Teile eines handelsüblichen Silikonöls zugefügt und weitere 30 Minuten dispergiert. Anschließend wurde die Dispersion filtriert und auf einer üblichen Beschichtungsmaschine mittels eines Linealgießers auf eine Polyethylenterephthalatfolie aufgebracht, so daß sich nach dem Trocknen und Kalandrieren eine Trockenschichtdicke von 5,5 $\mu$m ergab. Unmittelbar nach dem Aufgießen der flüssigen Dispersion wurden die nadelförmigen Chromdioxidteilchen durch ein Magnetfeld längs der Aufzeichnungsrichtung orientiert. Die an den Bandproben gemessenen magnetischen Eigenschaften sowie die Bandklimastabilität und der Remanenzabfall in Prozent sind in Tabelle 2 angegeben.

Vergleichsbeispiele BV 1 bis 6

Die Verarbeitung der Chromdioxidproben nach den Vergleichsversuchen 1 bis 6 erfolgte unter den gleichen Bedingungen wie in Beispiel B1 beschrieben. Die an den Bandproben gemessenen magnetischen Eigenschaften sowie die Bandklimastabilität und der Remanenzabfall in Prozent sind in Tabelle 2 angegeben.

Tabelle 2

|  | $M_r$ [mT] | $M_r(14)$ [mT] | Abfall der Remanenz [%] |
|---|---|---|---|
| Beispiel B1 | 163 | 162,7 | 0,3 |
| Beispiel B2 | 145 | 145 | 0,0 |
| Beispiel B3 | 145 | 145 | 0,0 |
| Beispiel B4 | 151 | 149,3 | 1,1 |
| Beispiel B5 | 146 | 145 | 0,8 |
| Vergl. Vers. BV1 | 170 | 153 | 10 |
| Vergl. Vers. BV2 | 180 | 159 | 11,8 |
| Vergl. Vers. BV3 | 170 | 129 | 24 |
| Vergl. Vers. BV4 | 148 | 133 | 9,8 |
| Vergl. Vers. BV5 | 134 | 128 | 4,5 |
| Vergl. Vers. BV6 | 152 | 121,6 | 20 |

**Patentansprüche**

1. Chromdioxidmaterial, bestehend aus nadelförmigen, ferromagnetischen Chromdioxidteilchen mit einer nichtmagnetischen, wasserstoffhaltigen Oberflächenschutzschicht, dadurch gekennzeichnet, daß das Chromdioxidmaterial bei einem Z 200-Wert von kleiner 0,85 ppm eine Sättigungsmagnetisierung von größer 80 nTm$^3$/g aufweist.

2. Verfahren zur Herstellung des Chromdioxidmaterials gemäß Anspruch 1, dadurch gekennzeichnet, daß das bei der Hochdrucksynthese entstandene und noch unbehandelte Chromdioxidmaterial zuerst bei einer Temperatur zwischen 360 und 420°C 10 bis 360 Minuten lang getempert, anschließend in 5 bis 15 Gewichtsteilen Wasser je Gewichtsteil Chromdioxid suspendiert und mit 0,2 bis 0,4 Gewichtsteilen Natriumsulfit, in Wasser gelöst, versetzt und bei 60 bis 95°C bis zu 180 Minuten lang behandelt wird.

3. Magnetische Aufzeichnungsträger, bestehend aus einem nichtmagnetischen Trägermaterial und einer magnetisierbaren Schicht auf der Basis des in einem Bindemittel und weiteren üblichen Zusatzstoffen feinverteilten Chromdioxidmaterials gemäß Anspruch 1, dadurch gekennzeichnet, daß die remanente Magnetisierung der magnetisierbaren Schicht mindestens 145 mT beträgt und im Klimatest bei Lagerung an Luft bei 50°C und 70 % relativer Feuchte innerhalb von 14 Tagen um weniger als 1,5% abnimmt.

## Claims

1. A chromium dioxide material consisting of acicular, ferromagnetic chromium dioxide particles having a nonmagnetic, hydrogen-containing protective surface layer, wherein the chromium dioxide material has a saturation magnetization greater than 80 nTm$^3$/g and a Z 200 value of less than 0.85 ppm.

2. A process for the preparation of a chromium dioxide material as claimed in claim 1, wherein the chromium dioxide material formed in the high pressure synthesis and still untreated is first heated at from 360 to 420 °C for from 10 to 360 minutes, then suspended in from 5 to 15 parts by weight of water per part by weight of chromium dioxide, mixed with an aqueous solution of from 0.2 to 0.4 part by weight of sodium sulfite and treated at from 60 to 95 °C for not more than 180 minutes.

3. A magnetic recording medium consisting of a non-magnetic substrate material and a magnetizable layer based on the chromium dioxide material as claimed in claim 1 which is finely distributed in a binder and in further conventional additives, wherein the residual magnetization of the magnetizable layer is not less than 145 mT and decreases by less than 1.5% in the course of 14 days in the environmental test when stored in air at 50 °C and 70% relative humidity.

## Revendications

1. Matériau de dioxyde de chrome constitué de particules de dioxyde de chrome ferromagnétiques aciculaires à couche superficielle protectrice non magnétique, à teneur en hydrogène, caractérisé par le fait que le matériau de dioxyde de chrome possède, à une valeur Z-200 inférieure à 0,85 ppm, une magnétisation de saturation supérieure à 80 nTm$^3$/g.

2. Procédé de préparation de matériau de dioxyde de chrome selon la revendication 1, caractérisé par le fait que le matériau dioxyde de chrome produit par synthèse haute pression et encore non traité est d'abord chauffé durant 10 à 360 minutes, à une température comprise entre 360 et 420 °C, ensuite est mis en suspension dans 5 à 15 parties en poids d'eau par partie en poids de dioxyde de chrome et mélangé, dissous dans l'eau, avec 0,2 à 0,4 partie en poids de sulfate de sodium et traité à 60 à 95 °C durant jusqu'à 180 minutes.

3. Support d'enregistrement magnétique constitué d'un matériau support non magnétique et d'une couche magnétisable à base du matériau de dioxyde de chrome selon la revendication 1 finement divisé dans un liant et autres additifs usuels, caractérisé par le fait que la magnétisation rémanente de la couche magnétisable est d'au moins 145 mT et décroit de moins de 1,5 % lors d'un essai climatique durant une quinzaine de jours en stockage à l'air, à 50 °C et humidité relative de 70 %.